# EUROPEAN PATENT SPECIFICATION

(11) **EP 4 161 758 B1**
(45) Date of publication and mention of the grant of the patent: **28.08.2024**
(21) Application number: 21737261.4
(22) Date of filing: 08.06.2021
(51) Int. Cl.: B29C 64/106, B29C 64/393, B33Y 10/00, B33Y 50/02, B29K 101/10

(54) **METHOD AND SYSTEM FOR CONTROLLING FLOW DURING THREE DIMENSIONAL PRINTING**
VERFAHREN UND SYSTEM ZUR STEUERUNG DES FLUSSES BEIM DREIDIMENSIONALEN DRUCKEN
PROCÉDÉ ET SYSTÈME DE RÉGULATION DE L'ÉCOULEMENT LORS D'UNE IMPRESSION EN TROIS DIMENSIONS

(30) Priority: 08.06.2020 US 202063036115 P
(43) Date of publication of application: 12.04.2023
(73) Proprietor: Chromatic 3D Materials Inc., Golden Valley, MN 55427 (US)
(72) Inventor: LEIBIG, Cora, Maple Grove, Minnesota 55311 (US); LEIBIG, Theresa, Maple Grove, Minnesota 55311 (US); GARROD, Michael, Minnetrista, Minnesota 55375 (US); BENSON, Garth, Burnsville, Minnesota 55337 (US)
(74) Representative: Lelkes, Robert
(86) International application number: PCT/US2021/036383
(87) International publication number: WO 2021/252477

(56) References cited:
- WO-A1-2016/191329
- US-A1- 2019 168 446
- US-A1- 2019 270 254
- ORLANDO RIOS ET AL: "Evaluation of Advanced Polymers for Additive Manufacturing", 8 September 2017 (2017-09-08), United States, XP055513406, Retrieved from the Internet <URL:https://web.ornl.gov/sci/manufacturing/docs/reports/web_PPG_MDF-TC-2014-048_Final%20Report.pdf> [retrieved on 20181008]

## Description

### FIELD

The present disclosure relates to 3D additive manufacturing methods and methods of 3D additive manufacturing where the printing path comprises a discontinuity. The application also relates to a 3D object prepared by 3D additive manufacturing.

### BACKGROUND

Fused filament fabrication (FFF), also referred to as thermoplastic extrusion, plastic jet printing (PJP), fused filament method (FFM), or fusion deposition modeling, is an additive manufacturing process wherein a material is extruded in successive layers onto a platform to form a three-dimensional (3D) product. Typically, FFF uses a melted thermoplastic material that is extruded onto a platform. Three-dimensional printing (3D printing) sometimes uses support structures that are easily dissolved or removed from the part after printing.

Disadvantages of existing FFF technology using thermoplastics include single material property printing, limited print-direction strength, limited durability, and limited softness. Thermosetting materials have generally not been used in FFF because prior to cure, the monomers are low viscosity liquids, and upon deposition, the curing liquid flows or breaks into droplets, resulting in finished parts of low quality and undesirably low resolution. Attempts to print with thermosetting materials has required addition of fillers (such as inorganic powders or polymers) to induce thixotropic behavior in the resin before it is fully cured. These solutions adversely affect the final properties of the printed part. Other problems include poor resolution control in the printed part and frequent clogging of mixing systems.

3D printing paths can include discontinuities or stoppages. But when the printer is instructed to stop depositing material, additional material can continue to flow out of the printer nozzle. This additional flow can cause undesirable effects in the final 3D object. US2019/168446 discloses a process and a system according to the preambles of claim 1 and claim 16 respectively.

### SUMMARY

The present disclosure is related to 3D printing methods and 3D printed objects.

The present disclosure is directed to a three-dimensional (3D) object production process comprising: providing a thermoset printing apparatus comprising: a mixing chamber to receive and mix at least a first reactive component and a second reactive component to provide a thermosetting material, an extrusion nozzle to deliver the thermosetting material to form a 3D object, at least one actuator coupled to the extrusion nozzle to move the extrusion nozzle when delivering the thermosetting material to form the 3D object, and a controller comprising one or more processors and coupled to the extruded thermoset printing apparatus, and depositing the thermosetting material to form the 3D object, wherein the controller generates a printing path for the 3D printing process, executes a translation start command, a flow start command, a translation command, a flow command, a translation stop command, a flow stop command, and a reverse translation command to the thermoset printing apparatus during the 3D printing process, identifies an at least one discontinuity in the printing path, executes the flow stop command before the extrusion nozzle reaches the at least one discontinuity, executes the translation stop command before the at least one discontinuity, and executes a reverse translation command.

In certain embodiments, the 3D object production process comprises depositing the thermosetting material for at least about 0.05 seconds after executing the reverse translation command.

In certain embodiments, the 3D object production process comprises depositing the thermosetting material for at least about 10 seconds after executing the reverse translation command. In certain embodiments, the 3D object production process comprises depositing the thermosetting material for at least about 30 seconds after executing the reverse translation command. In certain embodiments, the 3D object production process comprises depositing the thermosetting material for at least about 0.05 seconds, about 0.1 seconds, about 0.5 seconds, about 0.75 seconds, about 1 second, about 2 seconds, about 5 seconds, about 10 seconds, about 20 seconds, about 30 seconds, or about 1 minute after executing the reverse translation command.

In certain embodiments, the 3D object production process comprises depositing the thermosetting material for from about 0.05 seconds to about 30 seconds, about 0.1 seconds to about 20 seconds, about 0.5 seconds to about 5 seconds, about 1 second to about 5 minutes after executing the reverse translation command. In certain embodiments, the 3D object production process comprises depositing the thermosetting material for from about 5 seconds to about 1 minute after executing the reverse translation command. In certain embodiments, the 3D object production process comprises depositing the thermosetting material for from about 10 seconds to about 30 seconds after executing the reverse translation command.

In certain embodiments, the 3D object production process comprises after executing the reverse translation command, depositing from about 0.05 percent to about 10 percent, about 0.1 percent to about 5 percent, or about 0.5 percent to about 3 percent, or at least about 0.05 percent, about 0.1 percent, about 1 percent, about 5 percent, about 10 percent, or about 25 percent of the thermosetting material remaining in the extrusion nozzle. In certain embodiments, the 3D object production process comprises after executing the reverse translation command, depositing at least about 50 percent of the thermosetting material remaining in the extrusion nozzle. In certain embodiments, the 3D object production process comprises after executing the reverse translation command, depositing at least about 75 percent of the thermosetting material remaining in the extrusion nozzle. In certain embodiments, the 3D object production process comprises after executing the reverse translation command, depositing at least about 99 percent of the thermosetting material remaining in the extrusion nozzle.

In certain embodiments, the 3D object production process comprises modifying existing G-Code or creating G-Code with the intention that the first 0-200mm and last 0-200mm of the extrusion have alterations to their parameters relative to the middle portion of the extrusion. This is in contrast to other described methods wherein the alteration is appended to the start or end of an existing extrusion command in G-Code. These alterations can include feed-rate, flow-rate, and relative height of the tip in relation to the rest of the extrusion. These changes can ameliorate the starting and stopping effects of the extruder, where can experience pressure buildup over time and the initial bead out of the tip may not reach or adhere to the previous layer, especially if the previous layer has inconsistencies..

In certain embodiments, the 3D object production process comprises depositing the thermosetting material for at least about 1 second after executing the flow stop command. In certain embodiments, the 3D object production process comprises depositing the thermosetting material for at least about 10 seconds after executing the flow stop command. In certain embodiments, the 3D object production process comprises depositing the thermosetting material for at least about 30 seconds after executing the flow stop command. In certain embodiments, the 3D object production process comprises depositing the thermosetting material for at least about 0.05 seconds, about 0.1 seconds, about 0.5 seconds, about 0.75 seconds, about 1 second, about 2 seconds, about 5 seconds, about 10 seconds, about 20 seconds, about 30 seconds, or about 1 minute after executing the flow stop command.

In certain embodiments, the 3D object production process comprises depositing the thermosetting material for from about 0.05 seconds to about 30 seconds, about 0.1 seconds to about 20 seconds, about 0.5 seconds to about 5 seconds, or about 1 second to about 5 minutes after executing the flow stop command. In certain embodiments, the 3D object production process comprises depositing the thermosetting material for from about 5 seconds to about 1 minute after executing the flow stop command. In certain embodiments, the 3D object production process comprises depositing the thermosetting material for from about 10 seconds to about 30 seconds after executing the flow stop command.

In certain embodiments, the 3D object production process comprises after executing the flow stop command, depositing at least about 0.05 percent, about 0.1 percent, about 1 percent, about 5 percent, about 10 percent, or about 25 percent of the thermosetting material remaining in the extrusion nozzle. In certain embodiments, the 3D object production process comprises after executing the flow stop command, depositing at least about 50 percent of the thermosetting material remaining in the extrusion nozzle. In certain embodiments, the 3D object production process comprises after executing the flow stop command, depositing at least about 75 percent of the thermosetting material remaining in the extrusion nozzle. In certain embodiments, the 3D object production process comprises after executing the flow stop command, depositing at least about 99 percent of the thermosetting material remaining in the extrusion nozzle.

In certain embodiments, the 3D object production process comprises at least two discontinuities in the printing path, such as tens, hundreds, or thousands of discontinuities.

In certain embodiments, the 3D object production process comprises at least a third reactive component. In certain embodiments, the 3D object production process comprises at least a fourth reactive component.

In certain embodiments of the 3D object production process, the at least one discontinuity occurs at the end of a printing layer.

In certain embodiments of the 3D object production process, the thermosetting material comprises a viscoelasticity having a G'/G" greater than about 0.1.

In certain embodiments of the 3D object production process, the thermoset printing apparatus comprises a suction pump. In certain embodiments, the 3D object production process comprises applying suction during the depositing. In certain embodiments, the 3D object production process comprises applying suction after executing the reverse translation command. In certain embodiments, the 3D object production process comprises applying suction after executing the translation stop command. In certain embodiments, the 3D object production process comprises applying suction after executing the flow stop command.

In certain embodiments, the 3D object production process comprises applying suction for at least about 1 second. In certain embodiments, the 3D object production process comprises applying suction for at least about 10 seconds. In certain embodiments, the 3D object production process comprises applying suction for at least about 30 seconds. In certain embodiments, the 3D object production process comprises applying suction for at least about 1 minute. In certain embodiments, the 3D object production process comprises applying suction for about 0.05 seconds, about 0.1 seconds, about 0.5 seconds, about 0.75 seconds, about 1 second, about 2 seconds, about 5 seconds, about 10 seconds, about 20 seconds, about 30 seconds, or from about 0.05 seconds to about 30 seconds or 1 second to about 5 minutes. In certain embodiments, the 3D object production process comprises applying suction for from about 5 seconds to about 1 minute. In certain embodiments, the 3D object production process comprises applying suction for from about 10 seconds to about 30 seconds.

In certain embodiments, the 3D object production process comprises executing the flow start command before executing the translation start command. In certain embodiments, the 3D object production process comprises executing the flow start command at least 0.05 seconds, about 0.1 seconds, about 0.5 seconds, about 0.75 seconds, about 1 second, about 2 seconds, or about 5 seconds before executing the translation start command. In certain embodiments, the 3D object production process comprises executing the flow start command at least about 1 second before executing the translation start command. In certain embodiments, the 3D object production process comprises executing the flow start command at least about 2 seconds before executing the translation start command.

In certain embodiments of the 3D object production process, the depositing compromises a translation speed of at least about 50 mm/min or about 20,000 mm/min. In certain embodiments of the 3D object production process, the depositing compromises a translation speed of at least about 500 mm/min. In certain embodiments of the 3D object production process, the depositing compromises a translation speed of at least about 1000 mm/min. In certain embodiments of the 3D object production process, the depositing compromises a translation speed of at least about 5000 mm/min, about 10,000 mm/min, about 15,000 mm/min, or about 20,000 mm/min. In certain embodiments of the 3D object production process, the depositing compromises a translation speed of from about 100 mm/min to about 5000 mm/min. In certain embodiments of the 3D object production process, the depositing compromises a translation speed of from about 500 mm/min to about 1000 mm/min.

In certain embodiments of the 3D object production process, the translation speed before executing the flow stop command is different than the translation speed after executing the flow stop command. In certain embodiments of the 3D object production process, the translation speed before executing the reverse translation command is different than the translation speed after executing the reverse translation command. In certain embodiments of the 3D object production process, the translation speed before executing the translation stop command is different than the translation speed after executing the translation stop command.

The present disclosure is directed to a three-dimensional (3D) object production system comprising a thermoset printing apparatus comprising: a mixing chamber to receive and mix at least a first reactive component and a second reactive component to provide a thermosetting material; an extrusion nozzle to deliver the thermosetting material to form the 3D object; at least one actuator coupled to the extrusion nozzle to move the extrusion nozzle when delivering the thermosetting material to form the 3D object; and a controller comprising one or more processors and operably coupled to the extruded thermoset printing apparatus, wherein the controller is configured to: generate a printing path for the 3D printing process, execute a translation start command, a flow start command, a translation command, a flow command, a translation stop command, a flow stop command, and a reverse translation command to the thermoset printing apparatus during the 3D printing process, identify an at least one discontinuity in the printing path, execute the flow stop command before the extrusion nozzle reaches the at least one discontinuity, execute the translation stop command before the at least one discontinuity, execute a reverse translation command, and produce a 3D object based on a 3D object design using thermosetting material delivered by the thermoset printing apparatus.

In certain embodiments, the present disclosure is directed to a 3D object produced by the disclosed methods or using the disclosed systems.

It is to be understood that both the Summary and the Detailed Description are exemplary and explanatory and are not restrictive of the subject-matter of the claims.

### DETAILED DESCRIPTION

Embodiments of the disclosure relate methods for 3D additive manufacturing and methods for 3D printing. Embodiments of the disclosure also relate to a 3D object prepared by 3D printing.

When executing a command to stop extrusion or depositing of thermosetting material in a 3D printing process, thermosetting material can continue to extrude from the extrusion nozzle. This can create undesirable effects in the printing process and in the printed 3D object.

Embodiments of the disclosure unexpectedly overcome this problem. In certain embodiments, embodiments of the disclosure overcome this problem by factoring in the amount of thermosetting material that continues to extrude from the extrusion nozzle even after executing the flow stop command.

As set out in claim 1, there is provided a three-dimensional (3D) object production process comprising providing a thermoset printing apparatus comprising a mixing chamber to receive and mix at least a first reactive component and a second reactive component to provide a thermosetting material, an extrusion nozzle to deliver the thermosetting material to form a 3D object, at least one actuator coupled to the extrusion nozzle to move the extrusion nozzle when delivering the thermosetting material to form the 3D object, and a controller comprising one or more processors and coupled to the extruded thermoset printing apparatus, and depositing the thermosetting material to form the 3D object. As set out in claim 1, the controller generates a printing path for the 3D printing process, executes a translation start command, a flow start command, a translation command, a flow command, a translation stop command, a flow stop command, and a reverse translation command to the thermoset printing apparatus during the 3D printing process, identifies an at least one discontinuity in the printing path, executes the flow stop command before the extrusion nozzle reaches the at least one discontinuity, executes the translation stop command before the at least one discontinuity, and executes a reverse translation command.

As set out in claim 16, there is provided a three-dimensional (3D) object production system comprising a thermoset printing apparatus comprising a mixing chamber to receive and mix at least a first reactive component and a second reactive component to provide a thermosetting material; an extrusion nozzle to deliver the thermosetting material to form the 3D object; at least one actuator coupled to the extrusion nozzle to move the extrusion nozzle when delivering the thermosetting material to form the 3D object; and a controller comprising one or more processors and operably coupled to the extruded thermoset printing apparatus, wherein the controller is configured to: generate a printing path for the 3D printing process, execute a translation start command, a flow start command, a translation command, a flow command, a translation stop command, a flow stop command, and a reverse translation command to the thermoset printing apparatus during the 3D printing process, identify an at least one discontinuity in the printing path, execute the flow stop command before the extrusion nozzle reaches the at least one discontinuity, execute the translation stop command before the at least one discontinuity, execute a reverse translation command, and produce a 3D object based on a 3D object design using thermosetting material delivered by the thermoset printing apparatus.

Embodiments of the disclosed methods can be used in the disclosed systems. Embodiments of the disclosed systems can be used in the disclosed methods.

Various examples and embodiments of the subject matter disclosed are possible and will be apparent to a person of ordinary skill in the art, given the benefit of this disclosure. In this disclosure reference to "some embodiments," "certain embodiments," "certain exemplary embodiments" and similar phrases each means that those embodiments are non-limiting examples of the inventive subject matter as set out in the claims, and there may be alternative embodiments which are not excluded.

The articles "a," "an," and "the" are used herein to refer to one or more than one (i.e., to at least one) of the grammatical object of the article. By way of example, "an element" means one element or more than one element.

As used herein, the term "about" means ±10 % of the noted value. By way of example only, at least "about 50 seconds" could include from at least 45 seconds to and including at least 55 seconds.

The word "comprising" is used in a manner consistent with its open-ended meaning, that is, to mean that a given product or process can optionally also have additional features or elements beyond those expressly described. It is understood that wherever embodiments are described with the language "comprising," otherwise analogous embodiments described in terms of "consisting of" and/or "consisting essentially of" are also contemplated and within the scope of this disclosure.

As used herein, the term "additive manufacturing" means extruded printing of thermosetting material. Additive manufacturing can be used interchangeably with 3D printing.

As used herein the term "layer translation path" means the path that is traversed by the printhead or extrusion nozzle while depositing material in the layer. In certain embodiments, the path can be followed to deposit material in the areas that have been specified by the slicing application. In certain embodiments, the layer translational path can be chosen such that a minimum amount of time elapses before an adjacent bead is placed. In certain embodiments, this minimum amount of time can be from about 1 second to about 5 minutes. In certain embodiments, this minimum amount of time can be from about 5 seconds to about 1 minute. In certain embodiments, this minimum amount of time can be about 1 second, about 5 seconds, about 10 seconds, about 15 seconds, about 20 seconds, about 25 seconds, about 30 second, about 35 seconds, about 40 seconds, about 45 seconds, about 50 seconds, about 60 second, about 90 seconds, about 2 minutes, about 3 minutes, about 4 minutes, about 5 minutes, or any ranges between the specified values. If an insufficient amount of time has elapsed, the beads can combine and form a bead with a different aspect ratio than a single bead. In certain embodiments, the algorithm which constructs a translation path can control a layer translation path such that a bead deformation does not occur when beads are placed adjacent to one another.

As used herein, the terms "thermoset," "thermoset product," and "thermoset material" are used interchangeably and refer to the reaction product of at least two chemicals which form a covalently bonded crosslinked or polymeric network. In contrast to thermoplastics, a thermoset product described herein can irreversibly solidify or set.

As used herein, the term "thermosetting material" refers to a covalently bonded crosslinked or polymeric network that is still reactive, e.g., it can still have hydroxyl, amine, and/or isocyanate functionality that gives a measureable hydroxyl number, NH number, or NCO number in a titration. In one embodiment, a thermosetting material can have a viscosity below 3,000,000 cp. In one embodiment, thermosetting material can have a molecular weight of no greater than 100,000 g/mol.

### Three-Dimensional (3D) Object Production Process and System

As set out in claim 1, the present disclosure is directed to a three-dimensional (3D) object production process comprising providing a thermoset printing apparatus comprising a mixing chamber to receive and mix at least a first reactive component and a second reactive component to provide a thermosetting material, an extrusion nozzle to deliver the thermosetting material to form a 3D object, at least one actuator coupled to the extrusion nozzle to move the extrusion nozzle when delivering the thermosetting material to form the 3D object, and a controller comprising one or more processors and coupled to the extruded thermoset printing apparatus, and depositing the thermosetting material to form the 3D object, wherein the controller generates a printing path for the 3D printing process, executes a translation start command, a flow start command, a translation command, a flow command, a translation stop command, a flow stop command, and a reverse translation command to the thermoset printing apparatus during the 3D printing process, identifies an at least one discontinuity in the printing path, executes the flow stop command before the extrusion nozzle reaches the at least one discontinuity, executes the translation stop command before the at least one discontinuity, and executes a reverse translation command.

As used herein, the term "discontinuity" means a portion of the printing path where no thermosetting material is deposited. In certain embodiments, a discontinuity can be on a single printing layer. In certain embodiments, a discontinuity can be on at least one printing layer. In certain embodiments, a discontinuity can extend from one printing layer to another printing layer, such as extending vertically through a portion of a 3D object or extending vertically through the entire 3D object. In certain embodiments, the discontinuity in one layer can be offset from the discontinuity in the previous layer. In certain embodiments, the distribution of discontinuities in the 3D object can be complex, varied, and/or irregular. In certain embodiments, the discontinuity can be at the end of the printing layer.

As used herein, the term "flow command" means instructions for the thermoset printing apparatus for flow of the thermosetting material through the printhead or extrusion nozzle during the depositing.

As used herein, the term "flow start command" means instructions for the thermoset printing apparatus to start flow from the mixing chamber to the extrusion nozzle for the depositing of thermosetting material.

As used herein, the term "flow stop command" means instructions for the thermoset printing apparatus to stop flow from the mixing chamber to the extrusion nozzle for the depositing of thermosetting material.

As used herein, the term "reverse translation command" means instructions for the thermoset printing apparatus to start movement of the printhead or extrusion nozzle while traversing the printing path in the reverse direction to the printing path that was previously traversed.

As used herein, the term "translation command" means instructions for the thermoset printing apparatus for movement of the printhead or extrusion nozzle while traversing the printing path.

As used herein, the term "translation start command" means instructions for the thermoset printing apparatus to start movement of the printhead or extrusion nozzle for traversing the printing path.

As used herein, the term "translation stop command" means instructions for the thermoset printing apparatus to stop movement of the printhead or extrusion nozzle while traversing the printing path.

In certain embodiments, the process comprises depositing the thermosetting material for an amount of time after executing the reverse translation command. In certain embodiments, the process comprises depositing the thermosetting material for about 0.05 seconds to about 30 seconds, about 0.1 seconds to about 20 seconds, about 0.5 seconds to about 5 seconds or at least about 1 second after executing the reverse translation command. In certain embodiments, the process comprises depositing the thermosetting material for at least about 10 seconds after executing the reverse translation command. In certain embodiments, the process comprises depositing the thermosetting material for at least about 30 seconds after executing the reverse translation command. In certain embodiments, the process comprises depositing the thermosetting material for at least about 1 minute after executing the reverse translation command.

In certain embodiments, the process comprises depositing the thermosetting material for about 0.05 seconds, about 0.1 seconds, about 0.2 seconds, about 0.3 seconds, about 0.4 seconds, about 0.5 seconds, about 0.6 seconds, about 0.7 seconds, about 0.8 seconds, about 0.9 seconds, about 1 second, about 2 seconds, about 3 seconds, about 4 seconds, about 5 seconds, about 6 seconds, about 7 seconds, about 8 seconds, about 9 seconds, about 10 seconds, about 11 seconds, about 12 seconds, about 13 seconds, about 14 seconds, about 15 seconds, about 16 seconds, about 17 seconds, about 18 seconds, about 19 seconds, about 20 seconds, about 21 seconds, about 22 seconds, about 23 seconds, about 24 seconds, about 25 seconds, about 26 seconds, about 27 seconds, about 28 seconds, about 29 seconds, about 30 second, about 35 seconds, about 40 seconds, about 45 seconds, about 50 seconds, about 60 second, about 90 seconds, about 2 minutes, about 3 minutes, about 4 minutes, about 5 minutes, or any ranges between the specified values, after executing the reverse translation command.

In certain embodiments, the process comprises depositing the thermosetting material for from about 0.05 seconds to about 30 seconds, about 0.1 seconds to about 20 seconds, about 0.5 seconds to about 5 seconds, about 1 second to about 5 minutes after executing the reverse translation command. In certain embodiments, the process comprises depositing the thermosetting material for from about 5 seconds to about 1 minute after executing the reverse translation command. In certain embodiments, the process comprises depositing the thermosetting material for from about 10 seconds to about 30 seconds after executing the reverse translation command.

In certain embodiments, the process comprises, after executing the reverse translation command, depositing a percentage of the thermosetting material remaining in the extrusion nozzle. In certain embodiments the process comprises, after executing the reverse translation command, depositing from about 0.05 percent to about 10 percent, about 0.1 percent to about 5 percent, or about 0.5 percent to about 3 percent, or at least about 25 percent of the thermosetting material remaining in the extrusion nozzle. In certain embodiments the process comprises, after executing the reverse translation command, depositing at least about 50 percent of the thermosetting material remaining in the extrusion nozzle. In certain embodiments the process comprises, after executing the reverse translation command, depositing at least about 75 percent of the thermosetting material remaining in the extrusion nozzle. In certain embodiments the process comprises, after executing the reverse translation command, depositing at least about 99 percent of the thermosetting material remaining in the extrusion nozzle.

In certain embodiments, the process comprises, after executing the reverse translation command, depositing about 0.05 percent, about 0.1 percent, about 0.25 percent, about 0.5 percent, about 0.75 percent, about 1 percent, about 2 percent, about 3 percent, about 4 percent, about 5 percent, about 10 percent, about 15 percent, about 20 percent, about 25 percent, about 30 percent, about 35 percent, about 40 percent, about 25 percent, about 50 percent, about 55 percent, about 60 percent, about 65 percent, about 70 percent, about 75 percent, about 80 percent, about 85 percent, about 90 percent, about 91 percent, about 92 percent, about 93 percent, about 94 percent, about 95 percent, about 96 percent, about 97 percent, about 98 percent, about 99 percent, or any ranges between the specified values, of the thermosetting material remaining in the extrusion nozzle.

In certain embodiments, the process comprises depositing the thermosetting material for an amount of time after executing the flow stop command. In certain embodiments, the process comprises depositing the thermosetting material for about 0.05 seconds to about 30 seconds, about 0.1 seconds to about 20 seconds, about 0.5 seconds to about 5 seconds or at least about 1 second after executing the flow stop command. In certain embodiments, the process comprises depositing the thermosetting material for at least about 10 seconds after executing the flow stop command. In certain embodiments, the process comprises depositing the thermosetting material for at least about 30 seconds after executing the flow stop command. In certain embodiments, the process comprises depositing the thermosetting material for at least about 1 minute after executing the flow stop command.

In certain embodiments, the process comprises depositing the thermosetting material for about 0.05 seconds, about 0.1 seconds, about 0.2 seconds, about 0.3 seconds, about 0.4 seconds" about 0.5 seconds, about 0.6 seconds, about 0.7 seconds, about 0.8 seconds, about 0.9 seconds, about 1 second, about 2 seconds, about 3 seconds, about 4 seconds, about 5 seconds, about 6 seconds, about 7 seconds, about 8 seconds, about 9 seconds, about 10 seconds, about 11 seconds, about 12 seconds, about 13 seconds, about 14 seconds, about 15 seconds, about 16 seconds, about 17 seconds, about 18 seconds, about 19 seconds, about 20 seconds, about 21 seconds, about 22 seconds, about 23 seconds, about 24 seconds, about 25 seconds, about 26 seconds, about 27 seconds, about 28 seconds, about 29 seconds, about 30 second, about 35 seconds, about 40 seconds, about 45 seconds, about 50 seconds, about 60 second, about 90 seconds, about 2 minutes, about 3 minutes, about 4 minutes, about 5 minutes, or any ranges between the specified values, after executing the flow stop command.

In certain embodiments, the process comprises depositing the thermosetting material for from about 0.05 seconds to about 30 seconds, about 0.1 seconds to about 20 seconds, about 0.5 seconds to about 5 seconds, about 1 second to about 5 minutes after executing the flow stop command. In certain embodiments, the process comprises depositing the thermosetting material for from about 5 seconds to about 1 minute after executing the flow stop command. In certain embodiments, the process comprises depositing the thermosetting material for from about 10 seconds to about 30 seconds after executing the flow stop command.

In certain embodiments, the process comprises, after executing the flow stop command, depositing a percentage of the thermosetting material remaining in the extrusion nozzle. In certain embodiments the process comprises, after executing the flow stop command, depositing from about 0.05 percent to about 10 percent, about 0.1 percent to about 5 percent, or about 0.5 percent to about 3 percent, or at least about 25 percent of the thermosetting material remaining in the extrusion nozzle. In certain embodiments the process comprises, after executing the flow stop command, depositing at least about 50 percent of the thermosetting material remaining in the extrusion nozzle. In certain embodiments the process comprises, after executing the flow stop command, depositing at least about 75 percent of the thermosetting material remaining in the extrusion nozzle. In certain embodiments the process comprises, after executing the flow stop command, depositing at least about 99 percent of the thermosetting material remaining in the extrusion nozzle.

In certain embodiments, the process comprises, after executing the flow stop command, depositing about 0.05 percent, about 0.1 percent, about 0.25 percent, about 0.5 percent, about 0.75 percent, about 1 percent, about 2 percent, about 3 percent, about 4 percent, about 5 percent, about 10 percent, about 15 percent, about 20 percent, about 25 percent, about 30 percent, about 35 percent, about 40 percent, about 25 percent, about 50 percent, about 55 percent, about 60 percent, about 65 percent, about 70 percent, about 75 percent, about 80 percent, about 85 percent, about 90 percent, about 91 percent, about 92 percent, about 93 percent, about 94 percent, about 95 percent, about 96 percent, about 97 percent, about 98 percent, about 99 percent, or any ranges between the specified values, of the thermosetting material remaining in the extrusion nozzle.

In certain embodiments, there can be any number of discontinuities in the printing path. In certain embodiments, the printing path can have one discontinuity. In certain embodiments, the printing path can have at least one discontinuity. In certain embodiments, there can be at least two discontinuities in the printing path. In certain embodiments, there can be at least three discontinuities in the printing path. In certain embodiments, there can be at least four discontinuities in the printing path. In certain embodiments, there can be at least five discontinuities in the printing path. In certain embodiments, there can be 1, 2, 3, 4, 5, 6, 7, 8, 9, 10, tens, hundreds, thousands, or any ranges between the specified values, of discontinuities in the printing path. In certain embodiments, the at least one discontinuity can be at the end of a printing layer.

In certain embodiments, the process can comprise use of any number of reactive components. In certain embodiments, the process can comprise use of a first reactive component and a second reactive component. In certain embodiments, the process can comprise at least a third reactive component. In certain embodiments, the process can comprise at least a fourth reactive component. In certain embodiments, the process can comprise at least a fifth reactive component.

In certain embodiments, the thermosetting material can be have a particular viscoelasticity. Applicant has surprisingly discovered that the amount of thermosetting material that can be extruded after a flow stop command is executed can depend on the thermosetting material's viscoelasticity. Viscoelastic materials can have both solid-like and liquid-like properties. In certain embodiments, viscoelasticity can be the ratio of storage modulus to loss modulus. If the thermosetting material is highly elastic, then once the flow stop command is executed, the material can spring back into the printhead. If the material is highly viscous, then the material can flow until the pressure that was used to force extrusion is relaxed within the material. This viscous response can be considered the thermosetting material's latency. The speed of the response of the material to a force change from positive pressure to light suction can depend on the viscosity of the thermosetting material. In certain embodiments, a thermosetting material can flow unless a light suction is supplied. In certain embodiments, the viscoelasticity can have a G'/G" (often referred to as tan delta) greater than about 0.1, about 0.2, about 0.3, about 0.4, about 0.5, about 0.6, about 0.7, about 0.8, about 0.9 or about 1, or any ranges between the specified values.

In certain embodiments, the thermoset printing apparatus can comprise use of a pump. In certain embodiments, the thermoset printing apparatus can comprise a suction pump. In certain embodiments, the process comprises applying suction during the depositing. In certain embodiments, the process comprises applying suction after executing the reverse translation command. In certain embodiments, the process comprises applying suction after executing the translation stop command. In certain embodiments, the process comprises applying suction after executing the flow stop command.

In certain embodiments, the suction can be applied for any amount of time. In certain embodiments, the process comprises applying suction for from about 0.05 seconds to about 30 seconds, about 0.1 seconds to about 20 seconds, about 0.5 seconds to about 5 seconds or at least about 1 second. In certain embodiments, the process comprises applying suction for at least about 10 seconds. In certain embodiments, the process comprises applying suction for at least about 30 seconds. In certain embodiments, the process comprises applying suction for at least about 1 minute. In certain embodiments, the process comprises applying suction for from about 1 second to about 5 minutes. In certain embodiments, the process comprises applying suction for from about 5 seconds to about 1 minute. In certain embodiments, the process comprises applying suction for from about 10 seconds to about 30 seconds.

In certain embodiments, the process comprises applying suction for about 0.05 seconds, about 0.1 seconds, about 0.2 seconds, about 0.3 seconds, about 0.4 seconds, about 0.5 seconds, about 0.6 seconds, about 0.7 seconds, about 0.8 seconds, about 0.9 seconds, about 1 second, about 2 seconds, about 3 seconds, about 4 seconds, about 5 seconds, about 6 seconds, about 7 seconds, about 8 seconds, about 9 seconds, about 10 seconds, about 11 seconds, about 12 seconds, about 13 seconds, about 14 seconds, about 15 seconds, about 16 seconds, about 17 seconds, about 18 seconds, about 19 seconds, about 20 seconds, about 21 seconds, about 22 seconds, about 23 seconds, about 24 seconds, about 25 seconds, about 26 seconds, about 27 seconds, about 28 seconds, about 29 seconds, about 30 second, about 35 seconds, about 40 seconds, about 45 seconds, about 50 seconds, about 60 second, about 90 seconds, about 2 minutes, about 3 minutes, about 4 minutes, about 5 minutes, or any ranges between the specified values.

In certain embodiments, the process comprises executing the flow start command before executing the translation start command. In certain embodiments, the process comprises executing the flow start command at least about 0.5 seconds before executing the translation start command. In certain embodiments, the process comprises executing the flow start command at least about 1 second before executing the translation start command. In certain embodiments, the process comprises executing the flow start command at least about 2 seconds before executing the translation start command.

In certain embodiments, the process comprises comprises executing the flow start command about 1 second, about 2 seconds, about 3 seconds, about 4 seconds, about 5 seconds, about 6 seconds, about 7 seconds, about 8 seconds, about 9 seconds, about 10 seconds, about 11 seconds, about 12 seconds, about 13 seconds, about 14 seconds, about 15 seconds, about 16 seconds, about 17 seconds, about 18 seconds, about 19 seconds, about 20 seconds, about 21 seconds, about 22 seconds, about 23 seconds, about 24 seconds, about 25 seconds, about 26 seconds, about 27 seconds, about 28 seconds, about 29 seconds, about 30 second, about 35 seconds, about 40 seconds, about 45 seconds, about 50 seconds, about 60 second, about 90 seconds, about 2 minutes, about 3 minutes, about 4 minutes, about 5 minutes, or any ranges between the specified values, before executing the translation start command.

In certain embodiments, a flow rate of the thermosetting material through the extrusion nozzle can be adjusted to optimize the flow rate through the extrusion nozzle. Depending on the properties of the reactive components and the geometry of the desired final 3D product, the flow rate adjustment can vary. As used herein, the term "flow rate through the extrusion nozzle" means a volumetric flow rate, or a volume of material in mm³ that is pushed through the nozzle in a second. The rate can vary depending on the tip diameter. In certain embodiments, the minimum rate can be set by the strength of the pump on the printer. In certain embodiments, the flow rate can controlled by the setting the pump displacement.

In certain embodiments, the flow rate through the extrusion nozzle can be from about 0.01 mm³/s to about 1 mm³/s. In certain embodiments, the flow rate can be from about 0.05 mm³/s to about 0.75 mm³/s. In certain embodiments, the flow rate can be from about 0.1 mm³/s to about 0.5 mm³/s. In certain embodiments, the flow rate can be about 0.01 mm³/s, about 0.02 mm³/s, about 0.03 mm³/s, about 0.04 mm³/s, about 0.05 mm³/s, about 0.06 mm³/s, about 0.07 mm³/s, about 0.08 mm³/s, about 0.09 mm³/s, about 0.1 mm³/s, about 0.15 mm³/s, about 0.2 mm³/s, about 0.25 mm³/s, about 0.3 mm³/s, about 0.35 mm³/s, about 0.4 mm³/s, about 0.45 mm³/s, about 0.5 mm³/s, about 0.55 mm³/s, about 0.6 mm³/s, about 0.65 mm³/s, about 0.7 mm³/s, about 0.75 mm³/s, about 0.8 mm³/s, about 0.85 mm³/s, about 0.9 mm³/s, about 0.95 mm³/s, about 1 mm³/s, or any ranges between the specified values. In certain embodiments, the flow rate of the material, combined with the volume of the mixing chamber, can set the extent of reaction of the material at the time that it leaves the nozzle. For example, if the printer is printing at 0.1 mm³/s and the mixer has a volume of 2 mm³, then the reaction mixture can be, on average, about 20 seconds into its reaction. If the flow rate is decreased to 0.01 mm³/s, then the reaction mixture can be, on average, about 200 seconds into its reaction.

In certain embodiments, the process can comprise depositing the thermosetting material any translation speed. In certain embodiments, the depositing compromises a translation speed of at least about 50 mm/min or about 100 mm/min. In certain embodiments, the depositing compromises a translation speed of at least about 500 mm/min. In certain embodiments, the depositing compromises a translation speed of at least about 1000 mm/min. In certain embodiments, the depositing compromises a translation speed of at least about 5000 mm/min, about 10,000 mm/min, about 15,000 mm/min, or about 20,000 mm/min. In certain embodiments, the depositing compromises a translation speed of from about 100 mm/min to about 5000 mm/min. In certain embodiments, the depositing compromises a translation speed of from about 500 mm/min to about 1000 mm/min. In certain embodiments, the translation speed before executing the flow stop command is different than the translation speed after executing the flow stop command.

In certain embodiments, the translation speed can be about 25 mm/min, about 50 mm/min, about 100 mm/min, about 25 mm/min, about 50 mm/min, about 100 mm/min, about 25 mm/min, about 50 mm/min, about 100 mm/min, about 200 mm/min, about 300 mm/min, about 400 mm/min, about 500 mm/min, about 600 mm/min, about 700 mm/min, about 800 mm/min, about 900 mm/min, about 1000 mm/min, about 1500 mm/min, about 2000 mm/min, about 2500 mm/min, about 3000 mm/min, about 3500 mm/min, about 4000 mm/min, about 4500 mm/min, about 5000 mm/min, about 5500 mm/min, about 6000 mm/min, about 6500 mm/min, about 7000 mm/min, about 7500 mm/min, about 8000 mm/min, about 8500 mm/min, about 9000 mm/min, about 9500 mm/min, about 10,000 mm/min, 15,000 mm/min, 20,000 mm/min or any ranges between the specified values.

In certain embodiments, the translation speed before executing the reverse translation command can be different than the translation speed after executing the reverse translation command. In certain embodiments, the translation speed before executing the reverse translation command can be the same as the translation speed after executing the reverse translation command. In certain embodiments, the translation speed before executing the translation stop command can be different than the translation speed after executing the translation stop command. In certain embodiments, the translation speed before executing the translation stop command can be the same as the translation speed after executing the translation stop command.

As set out in claim 16, the present disclosure is directed to a three-dimensional (3D) object production system comprising a thermoset printing apparatus comprising a mixing chamber to receive and mix at least a first reactive component and a second reactive component to provide a thermosetting material; an extrusion nozzle to deliver the thermosetting material to form the 3D object; at least one actuator coupled to the extrusion nozzle to move the extrusion nozzle when delivering the thermosetting material to form the 3D object; and a controller comprising one or more processors and operably coupled to the extruded thermoset printing apparatus, wherein the controller is configured to generate a printing path for the 3D printing process, execute a translation start command, a flow start command, a translation command, a flow command, a translation stop command, a flow stop command, and a reverse translation command to the thermoset printing apparatus during the 3D printing process, identify an at least one discontinuity in the printing path, execute the flow stop command before the extrusion nozzle reaches the at least one discontinuity, execute the translation stop command before the at least one discontinuity, execute a reverse translation command, and produce a 3D object based on a 3D object design using thermosetting material delivered by the thermoset printing apparatus.

The disclosure related to the process is incorporated to the system.

### Thermosetting Material

The thermosetting material according to embodiments of the disclosure can be composed of any number of materials.

In certain embodiments, the thermosetting material can be an isocyanate, an isocyanate prepolymer, a urethane, a urea-containing polymer, a polyol prepolymer, an amine prepolymer, a polyol containing at least one terminal hydroxyl group, a polyamine containing at least one amine that contains an isocyanate reactive hydrogen, or mixtures thereof.

In certain embodiments, the thermosetting material can be an isocyanate. In certain embodiments, the thermosetting material can be an isocyanate prepolymer. In certain embodiments, the thermosetting material can be a urethane. In certain embodiments, the thermosetting material can be a urea-containing polymer. In certain embodiments, the thermosetting material can be a polyol prepolymer. In certain embodiments, the thermosetting material can be an amine prepolymer. In certain embodiments, the thermosetting material can be a polyol containing at least one terminal hydroxyl group. In certain embodiments, the thermosetting material can be a polyamine containing at least one amine that contains an isocyanate reactive hydrogen.

In certain embodiments, the thermosetting material can be a urethane and/or urea-containing polymer. In certain embodiments, a urethane and/or urea-containing polymer can be a polymer which contains urethane groups (-NH-(C=O)-O-) as part of the polymer chain. The urethane linkage can be formed by reacting isocyanate groups (-N=C=O) with hydroxyl groups (-OH). A polyurethane can be produced by the reaction of an isocyanate containing at least two isocyanate groups per molecule with a compound having terminal hydroxyl groups. In certain embodiments, an isocyanate having, on average, two isocyanate groups per molecule can be reacted with a compound having, on average, at least two terminal hydroxyl groups per molecule.

In certain embodiments, a urethane and/or urea-containing polymer can be a polymer which contains urea groups (-NH-(C=O)-NH-) as part of the polymer chain. A urea linkage can be formed by reacting isocyanate groups (-N=C=O) with amine groups (e.g., -N(R')₂), where each R' is independently hydrogen or an aliphatic and/or cyclic group (typically a (C₁-C₄)alkyl group)). A polyurea can be produced by the reaction of an isocyanate containing at least two isocyanate groups per molecule with a compound having terminal amine groups.

In certain embodiments, an aliphatic group can be a saturated or unsaturated linear or branched hydrocarbon group. This term can encompass alkyl (e.g., -CH₃) (or alkylene if within a chain such as -CH₂-), alkenyl (or alkenylene if within a chain), and alkynyl (or alkynylene if within a chain) groups, for example. In certain embodiments an alkyl group can be a saturated linear or branched hydrocarbon group including, for example, methyl, ethyl, isopropyl, t-butyl, heptyl, dodecyl, octadecyl, amyl, 2-ethylhexyl, and the like. In certain embodiments, an alkenyl group can be an unsaturated, linear or branched hydrocarbon group with one or more carbon-carbon double bonds, such as a vinyl group. In certain embodiments, an alkynyl group can be an unsaturated, linear or branched hydrocarbon group with one or more carbon-carbon triple bonds. Unless otherwise indicated, an aliphatic group typically contains from 1 to 30 carbon atoms. In certain embodiments, the aliphatic group can contain 1 to 20 carbon atoms, 1 to 10 carbon atoms, 1 to 6 carbon atoms, 1 to 4 carbon atoms, or 1 to 3 carbon atoms.

In certain embodiments, a cyclic group can be a closed ring hydrocarbon group that is classified as an alicyclic group, aromatic group, or heterocyclic group, and can optionally include an aliphatic group. In certain embodiments, an alicyclic group can be a cyclic hydrocarbon group having properties resembling those of aliphatic groups. In certain embodiments, an aromatic group or aryl group can be a mono- or polynuclear aromatic hydrocarbon group. In certain embodiments, a heterocyclic group can be a closed ring hydrocarbon in which one or more of the atoms in the ring is an element other than carbon (e.g., nitrogen, oxygen, sulfur, etc.). Unless otherwise specified, a cyclic group can have 6 to 20 carbon atoms, 6 to 18 carbon atoms, 6 to 16 carbon atoms, 6 to 12 carbon atoms, or 6 to 10 carbon atoms.

In certain embodiments, a urethane and/or urea-containing polymer can be a polymer that contains both urethane and urea groups as part of the polymer chain. A polyurethane/polyurea can be produced by the reaction of an isocyanate containing at least two isocyanate groups per molecule with a compound having terminal hydroxyl groups and a compound having terminal amine groups. In certain embodiments, a polyurethane/polyurea can be produced by the reaction of an isocyanate containing at least two isocyanate groups per molecule with a compound having terminal hydroxyl groups and terminal amine groups (e.g., a hydroxyl-amine such as 3-hydroxy-n-butylamine (CAS 114963-62-1)). A reaction to make a polyurethane, a polyurea, or a polyurethane/polyurea can include other additives, including but not limited to, a catalyst, a chain extender, a curing agent, a surfactant, a pigment, or a combination thereof.

An isocyanate, which can be considered a polyisocyanate, can have the structure R-(N=C=O)ₙ, where n can be at least 2, at least 3, at least 4, at least 5, at least 6, at least 7, or at least 8, and where R can be an aliphatic and/or cyclic group. In certain embodiments, an isocyanate can have an n that is equivalent to n in methylene diphenyl diisocyanate (MDI). In certain embodiments, the isocyanate can be a di-isocyanate (e.g., R-(N=C=O)₂ or (O=C=N)-R-(N=C=O)).

Examples of isocyanates can include, but are not limited to, methylene diphenyl diisocyanate (MDI) and toluene diisocyanate (TDI). Examples of MDI can include, but are not limited to, monomeric MDI, polymeric MDI, and isomers thereof. Examples of isomers of MDI having the chemical formula C₁₅H₁₀N₂O₂ can include, but are not limited to, 2,2'-MDI, 2,4'-MDI, and 4,4'-MDI. Examples of isomers of TDI having the chemical formula C₉H₆N₂O₂ can include, but are not limited to, 2,4-TDI and 2,6-TDI. In certain embodiments, examples of isocyanates can include, but are not limited to, monomeric diisocyanates and blocked polyisocyanates. In certain embodiments, examples of monomeric diisocyanates can include, but are not limited to, hexamethylene diisocyanate (HDI), methylene dicyclohexyl diisocyanate or hydrogenated MDI (HMDI), and isophorone diisocyanate (IPDI). In certain embodiments, an example of an HDI can be hexamethylene-1,6-diisocyanate. In certain embodiments, an example of an HMDI can be dicyclohexylmethane-4,4'-diisocyanate. Blocked polyisocyanates can be based on HDI or IDPI. In certain embodiments, examples of blocked polyisocyanates can include, but are not limited to, HDI trimer, HDI biuret, HDI uretidione, and IPDI trimer.

In certain embodiments, examples of isocyanates can include, but are not limited to, aromatic diisocyanates, such as a mixture of 2,4- and 2,6-tolylene diisocyanates (TDI), diphenylmethane-4,4'-diisocyanate (MDI), naphthalene-1,5-diisocyanate (NDI), 3,3'-dimethyl-4,4'-biphenylene diisocyanate (TODI), crude TDI, polymethylenepolyphenyl isocyanurate, crude MDI, xylylene diisocyanate (XDI), and phenylene diisocyanate; aliphatic diisocyanates, such as 4,4'-methylene-biscyclohexyl diisocyanate (hydrogenated MDI), hexamethylene diisocyanate (HMDI), isophorone diisocyanate (IPDI), and cyclohexane diisocyanate (hydrogenated XDI); and modified products thereof, such as isocyanurates, carbodiimides and allophanamides.

In certain embodiments, a compound having terminal hydroxyl groups (R-(OH)ₙ), where n is at least 2 (referred to herein as "di-functional"), at least 3 (referred to herein as "tri-functional"), at least 4, at least 5, at least 6, at least 7, at least 8, at least 9, and 10, where R is an aliphatic and/or cyclic group, can be a "polyol." In certain embodiments a polyol mixture can include a small amount of mono-functional compounds having a single terminal hydroxyl group.

In certain embodiments, examples of polyols can include, but are not limited to, polyester polyols and polyether polyols. In certain embodiments, examples of polyester polyols can include, but are not limited to, those built from condensation of acids and alcohols. In certain embodiments, examples can include those built from phthalic anhydride and diethylene glyol, phthalic anhydride and dipropylene glycol, adipic acid and butanediol, and succinic acid and butane or hexanediol. In certain embodiments, polyester polyols can be semi-crystalline. In certain embodiments, examples of polyether polyols can include, but are not limited to, those built from polymerization of an oxide such as ethylene oxide, propylene oxide, or butylene oxide from an initiator such as glycerol, dipropylene glycol, TPG (tripropylene glycol), castor oil, sucrose, or sorbitol.

In certain embodiments, examples of polyols can include, but are not limited to, polycarbonate polyols and lactone polyols such as polycaprolactone. In certain embodiments, a compound having terminal hydroxyl groups (R-(OH)ₙ) can have a molecular weight (calculated before incorporation of the compound having terminal hydroxyl groups into a polymer) of from about 200 Daltons to about 20,000 Daltons, such as from about 200 Daltons to about 10,000 Daltons.

In certain embodiments, a compound having terminal amine groups (e.g., R-(N(R')₂)ₙ), where n can be at least 2, at least 3, at least 4, at least 5, at least 6, at least 7, at least 8, at least 9, and 10, where R can be an aliphatic and/or cyclic group, and where each R' can be independently hydrogen or an aliphatic and/or cyclic group (e.g., a (C₁-C₄)alkyl group), can be referred to as a "polyamine." In certain embodiments, a polyamine mixture can include a small amount of mono-functional compounds having a single terminal amine group.

In certain embodiments, a suitable polyamine can be a diamine or triamine, and can be either a primary or secondary amine. In certain embodiments, a compound having terminal amine groups can have a molecular weight (calculated before incorporation of the compound having terminal hydroxyl groups into a polymer) of from about 30 Daltons to about 5000 Daltons, such as from about 40 Daltons to about 400 Daltons.

In certain embodiments, examples of polyamines can include, but are not limited to, diethyltoluene diamine, di-(methylthio)toluene diamine, 4,4'-methylenebis(2-chloroaniline), and chain extenders available under the trade names LONZACURE L15, LONZACURE M-CDEA, LONZACURE M-DEA, LONZACURE M-DIPA, LONZACURE M-MIPA, and LONZACURE DETDA.

In certain embodiments, examples of suitable polyamines can include, but are not limited to, ethylene diamine, 1,2-diaminopropane, 1,4-diaminobutane, 1,3-diaminopentane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluylene diamine, 2,4' and/or 4,4'-diaminodicyclohexyl methane, and 3,3'-dialkyl-4,4'-diamino-dicyclohexyl methanes such as 3,3'-dimethyl-4,4-diamino-dicyclohexyl methane and 3,3'-diethyl-4,4'-diaminodicyclohexyl methane; aromatic polyamines such as 2,4- and/or 2,6-diaminotoluene and 2,4' and/or 4,4'-diaminodiphenyl methane; and polyoxyalkylene polyamines.

In certain embodiments, the term polyol and/or polyamine mixture can be a mixture of one or more polyols of varied molecular weights and functionalities, one or more polyamines of varied molecular weights and functionalities, or a combination of one or more polyols and one or more polyamines.

In certain embodiments, the present disclosure also provides the compositions described herein and a thermoset system comprising, as set out in claims 1 and 16, a first reactive component and a second reactive component, and one or more optional reactive components, such as a third reactive component.

As set out in claims 1 and 16, the thermosetting material comprises two reactive components. In certain embodiments, the thermosetting material can comprise at least three reactive components. In certain embodiments, the thermosetting material can comprise at least four reactive components.

In certain embodiments, the thermosetting material can be prepared by methods disclosed in WO 2018/106822 and WO2019/113364. As set out in claim 1, a method for making a thermosetting material, such as a urethane and/or urea-containing polymer thermoset product, includes introducing first and second reactive components into a mixing chamber. In certain embodiments, the first reactive component can include an isocyanate and the second reactive component can include a polyol and/or polyamine mixture. In certain embodiments, the first reactive component can include an isocyanate and the second reactive component can include a polyol. In certain embodiments, the first reactive component can include an isocyanate and the second reactive component can include a polyamine. In certain embodiments, the first reactive component can include an isocyanate and the second reactive component can include a polyol and a polyamine. The first and second reactive components can have certain characteristics including, but not limited to, viscosity, reactivity, and chemical compatibility.

In certain embodiments, the thermosetting material can be a solid thermosetting material.

In certain embodiments, the thermosetting material can be a foam thermosetting material.

In certain embodiments, the thermosetting material can be a solid thermosetting material and a foam thermosetting material.

While the following description is in the context of foams, the description can apply to thermosetting materials, including urethane and/or urea-containing polymers in general, both non-foam and foam. Foams are available in a range of hardness and resiliencies. A urethane and/or urea-containing polymer can be very durable, permitting the foam to be used repeatedly without a change in properties. This range of properties permits these materials to be used in clinical settings where rigid positioning is desirable or where pressure distribution is more desirable.

Foams of urethane and/or urea-containing polymers can be the product of a reaction between two reactant components. A range of foam properties can be achieved by altering the relative weights of formulation components to balance reaction speed, interfacial tension of the reacting mixture, and elasticity of the polymeric scaffold. In 3D printing, an extrusion nozzle can deposit material, e.g., thermosetting material, on a substrate layer by layer, following a 3D computer model of the desired 3D object.

In certain embodiments, foam precursor formulas can enable high resolution 3D deposition to form a custom 3D foam object. In certain embodiments, by partially advancing the reaction of the precursors, such as polyurethane precursors, and adjusting catalyst and surfactant levels, it is possible to deposit the thermosetting material while maintaining the desired predetermined part resolution and mechanical integrity of the foam.

The production of a foam of urethane and/or urea-containing polymers can differ from the production of a non-foam urethane and/or urea-containing polymer by the inclusion of water. Foams of urethane and/or urea-containing polymer can be formed by the simultaneous reaction of isocyanates with water to form urea linkages and produce gas, and the reaction of isocyanates with multifunctional high molecular weight alcohols to form a crosslinked elastomeric foam scaffold.

In certain embodiments, foams can be formed by reacting monomers: a di-isocyanate, water, and multi-functional alcohol (e.g., a polyol) or a multi-functional amine. The quantity of water in the formula can affect the foam density and the strength of the foam scaffold. The molecular weight of the polyol and/or polyamine mixture can determine the crosslink density of the foam scaffold and the resulting elasticity, resiliency, and hardness of the foam. In certain embodiments, a nearly stoichiometric quantity of di-isocyanate can be used to fully react with the water and a polyol and/or polyamine mixture.

In certain embodiments, prepolymer synthesis can be used to alter the cure profile of a polyurethane or polyurea system. In prepolymer synthesis, a stoichiometric excess of di-isocyanate can be reacted with a polyol and/or polyamine mixture. The resulting prepolymer can have a higher molecular weight than the starting di-isocyanate, and molecules in the pre-polymer can have isocyanate functionality and therefore still be reactive. Because of the higher molecular weight, hydrogen bonding, and/or urea linkages, the prepolymer can also have a higher viscosity. This prepolymer can be subsequently reacted with a polyol and/or polyamine mixture and water to produce a foam with substantially the same foam scaffold composition that is achievable without prepolymer synthesis. However, viscosity growth profile can be altered, typically starting higher, and increasing more slowly, and therefore the morphological features of the foam, such as foam cell size and cell stability, can result in a foam with a very different appearance.

Support foams are not a single density, hardness, or resilience, but can span a wide range of performance. The present disclosure extends the entire range of foam properties. Foam density and hardness can be interrelated: low density foams can be softer foams. A range of foam density and hardness can be achieved first by varying the level of blowing agent, such as water, in the formulation and by adjusting the extent of excess isocyanate in the formula. Increasing the degree of functionality of the components of the polyol and/or polyamine mixture (e.g., incorporating some 4- or 6-functional polyols) can increase hardness and the viscosity growth rate during cure. Foam resilience can be altered by varying the polyols and/or polyamines incorporated in the formula. Memory foams can be achieved by reducing the molecular weight of the polyols and polyamines; high resiliency can be achieved by incorporating graft polyols. In certain embodiments, the foam density range can be less than 0.3 g/cm³, ranging from 30-50 ILFD hardness, and resilience ranging from 10 to 50%. Foam properties can also include open cell content and closed cell content. Open cell foams can be cellular structures built from struts, with windows in the cell walls which can permit flow of air or liquid between cells. Closed cells can be advantageous for preventing air flow, such as in insulation applications.

### Controller, Sensors, and Processors

As set out in claims 1 and 16, the present disclosure includes a control system or a computing apparatus operably coupled to a printing apparatus.

The computing apparatus can be, for example, any fixed or mobile computer system (e.g., a controller, a microcontroller, a personal computer, minicomputer, etc.). The exact configuration of the computing apparatus is not limiting, and essentially any device capable of providing suitable computing capabilities and control capabilities can be used, a digital file can be any medium (e.g., volatile or non-volatile memory, a CD-ROM, magnetic recordable tape, etc.) containing digital bits (e.g., encoded in binary, etc.) that can be readable and/or writeable by computing apparatus. Also, a file in user-readable format can be any representation of data (e.g., ASCII text, binary numbers, hexadecimal numbers, decimal numbers, graphically, etc.) presentable on any medium (e.g., paper, a display, etc.) readable and/or understandable by an operator.

As set out in claims 1 and 16, the control system includes one or more processors.

In certain embodiments, the system can the control system comprises one or more sensors. In certain embodiments, the one or more sensors can detect the location of the 3D printed object during the depositing.

In certain embodiments, the one or more sensors can detect the location of the 3D printed object during the depositing and optimize the depositing of the thermosetting material based on the shape and location of the 3D printed object.

As set out in claims 1 and 16, the controller comprises one or more processors and provides instructions to the extruded thermoset printing apparatus. These instructions can modify the method for printing a 3D printed object. In certain embodiments, these instructions instruct at least one actuator operably coupled to the extrusion nozzle to move the extrusion nozzle when delivering thermosetting material to form the 3D printed object.

In certain embodiments, a controller can analyze aspect ratio and deposit thermosetting material based on the aspect ratio of a bead. For example, the controller can instruct the 3D printer to print with a low aspect ratio / high viscosity bead for certain aspects of a 3D printed object and then the controller can instruct the 3D printer to print with a high aspect ratio / low viscosity bead for other aspects of a 3D printed object. This controlling of aspect ratio can provide a 3D printed object with high resolution, e.g., on the edges of a 3D object, and then use increased printing speeds to space fill aspects of a 3D object.

In certain embodiments, the controller can adjust one or both of the amount and flow rate of the thermosetting material to provide a physical property of a first area that is different than the same physical property of the second area. In certain embodiments, the physical property can be one or more of flexibility, color, optical refractive index, hardness, porosity, and density.

In certain embodiments, the controller can be configured to execute or the method further comprises adjusting one or both of an amount and a flow rate of a gas-generation source for use with one or more of a first, second, and third reactive components.

In certain embodiments, the controller can be configured to execute or the method further comprises controlling a distance between the extrusion nozzle and the 3D printed object.

### EXAMPLES

The methods, systems, and objects described herein are now further detailed with reference to the following examples. These examples are provided for the purpose of illustration only and the embodiments described herein should in no way be construed as being limited to these examples.

### Example 1: Printing of 3D Object Using Reverse Translation

A technique to minimize starting and stopping extrusion in each printed layer (decreasing travel moves between extrusion moves on the same layer) was implemented by creation of a process whereby the G-Code was created so that the outer-most shell curve was printed first, and then concentric infill is printed at 100% density (0.55 bead spacing, approx. 1200 mm/sec feed rate, 0.75 E/mm, 0.2 mm offset of tip from printed layer) without a travel move necessitating the stoppage of flow from the extruder. After the infill was finished printing, the innermost shell was printed directly afterwards. The choice of first shell to be printed could have been reversed.

To prevent over-extrusion and affect the dimensional requirements of a print (surface finish, geometry) the path of the first and last curve on a layer was specified. The settings were using 100 % density cycloidal-based infill with approx. 0.55 mm bead spacing, feed rate approx. 1200 mm/sec, flow: 0.75 E/mm, and 0.2 mm offset of the tip from the top of the infill layer being printed. The part was a cylinder with an extruded cut at its center going through the entire part. The approx. outer diameter was 50 mm and the inner diameter was approx. 21 mm. The shell curve printed last was printed as per the infill and then the lead-out G-Code was started. The same path as the last shell in the layer was then retraced with the extruder retracting -0.19 mm of equivalent filament as the printer was configured and the G-Code was defined per step along the curve with the approximation of the circle at approx. 0.19 mm line lengths.

### Example 2: Printing of 3D Object Using Reverse Translation

To prevent over-extruded material from negatively affecting the quality and shape of the print, the tip retraced its path after stopping extrusion. The retrace step was used independently or in conjunction with coasting and filament retraction. In this example, the retrace was used as the only method to control over-extrusion and oozing. To print 100 mm straight lines, the tip of the printer moved 100 mm to the left at 500 mm/s, extruding material at a rate of 0.523 E/mm. At the stop point, the tip stopped and lifted 1.5 mm above the print. The tip then moved 3 mm to the right at a rate of 500 mm/s. The material oozing from the tip settled on the freshly printed material, giving the line a clean edge. The tip then moved to the start point of the next line to be printed.

### Example 3: Printing of 3D Object by Lead-Out Block

An additional lead-out technique, not falling within the scope of the claims, was to retract a large amount and specify a designated path at a 90 deg angle to the path of the shell as the extruder pulled away from the last curve in a printed layer. A retract of -53.2 mm of equivalent filament as the firmware was configured and was retracted while the extruder moved diagonally up and away from the last printed curve; 15 mm in the Z-direction and 10 mm away from the last printed curve in the X-direction (90 deg to the print curve) to prevent the extruder from oozing filament over the just-printed layer with a feed rate of approx. 8.01 mm/sec.

### Example 4: Printing of 3D Object Using Lead-In and Lead-Out Block

In a process not falling within the scope of the claims, a lead-in / lead-out block was printed that connected to either the inside or outside shell of the printing layer. To mitigate the effects to the print of starting and stopping flow, these lead-in / out blocks were used. In this example, for a part with a diameter of 50 mm, a lead-in block of approx. 3.45 mm width and approx. 35.575 mm length was used, centered across the print's geometry. The minimum distance to the block was 4.825 mm from the outside edge of the print. A small bridge was created connecting the print to the lead-in block which doubled back on itself to create a bridge 3 beads wide. The full width of the bridge did not connect to the print; only one bead from the bridge extended far enough to connect with the print. The full width of the bridge terminated approx. 1.76 mm away from the printed object.

### Example 5: Printing of 3D Object Using Reverse Translation

Once the final shell curve was printed, the extruding nozzle moved up in the Z-direction over time and distance, allowing the resin to stop oozing and breaking the tension in the bead before moving across other portions of the print. In this example, the Z height was moved up 0.004 mm for every 1 mm of linear travel distance in X/Y coordinate plane.

### Example 6: Printing of 3D Object Using Modified Starts and Ends to a Bead

In a process not falling within the scope of the claims, the initial path (shell, outer perimeter) of an extrusion in a layer was modified so that the internal and external perimeters (first and last portions of a layer's extrusion) were offset 0.15mm lower than the infill of the layer. This slight offset allows for the bead to be started a smaller gap between the nozzle and the layer before multiple beads form at the beginning of a layer. This is useful to decrease the chance that the initial extrusion of a layer would delaminate from the print. The feed-rate of these starting and ending segments of the layer was also modified so that it printed at 1445mm/min, slower than the infill's printing rate of 1700mm/min. The starting and ending segments of the layer (i.e., shell or perimeter) had an extrusion modifier of 130% of the infill. All of these adjustments reduced the risk of the initial and/or ending portions of an extrusion to delaminate or gap. Instead of adding a specific prime or retract command, the bead's parameters were changed to control for the extruder's pressure build up at the start of a bead and ramp down at the end of a bead.

## Claims

1. A three-dimensional (3D) object production process comprising:
providing a thermoset printing apparatus comprising:
a mixing chamber to receive and mix at least a first reactive component and a second reactive component to provide a thermosetting material,
an extrusion nozzle to deliver the thermosetting material to form a 3D object,
at least one actuator coupled to the extrusion nozzle to move the extrusion nozzle when delivering the thermosetting material to form the 3D object, and
a controller comprising one or more processors and coupled to the extruded thermoset printing apparatus, and
depositing the thermosetting material to form the 3D object,
**characterized in that** the controller
generates a printing path for the 3D printing process,
executes a translation start command, a flow start command, a translation command, a flow command, a translation stop command, a flow stop command, and a reverse translation command to the thermoset printing apparatus during the 3D printing process,
identifies an at least one discontinuity in the printing path,
executes the flow stop command before the extrusion nozzle reaches the at least one discontinuity,
executes the translation stop command before the at least one discontinuity, and
executes a reverse translation command.

2. The 3D object production process according to claim 1, comprising depositing the thermosetting material for at least about 0.05 seconds after executing the reverse translation command.

3. The 3D object production process according to claim 1 or 2, wherein after executing the reverse translation command, depositing at least about 0.05 percent of the thermosetting material remaining in the extrusion nozzle.

4. The 3D object production process according to any one of the preceding claims, comprising depositing the thermosetting material for at least about 0.05 seconds after executing the flow stop command.

5. The 3D object production process according to any one of the preceding claims, wherein after executing the flow stop command, depositing at least about 0.05 percent of the thermosetting material remaining in the extrusion nozzle.

6. The 3D object production process according to any one of the preceding claims, comprising at least two discontinuities in the printing path.

7. The 3D object production process according to any one of the preceding claims, wherein the thermosetting material comprises a viscoelasticity having a G'/G" greater than about 0.1.

8. The 3D object production process according to any one of the preceding claims, wherein the thermoset printing apparatus comprises a suction pump.

9. The 3D object production process according to any one of the preceding claims, comprising applying suction after executing the reverse translation command.

10. The 3D object production process according to any one of the preceding claims, comprising applying suction after executing the translation stop command.

11. The 3D object production process according to any one of the preceding claims, comprising applying suction after executing the flow stop command.

12. The 3D object production process according to any one of the preceding claims, comprising executing the flow start command before executing the translation start command.

13. The 3D object production process according to any one of the preceding claims, wherein the translation speed before executing the flow stop command is different than the translation speed after executing the flow stop command.

14. The 3D object production process according to any one of the preceding claims, wherein the translation speed before executing the reverse translation command is different than the translation speed after executing the reverse translation command.

15. The 3D object production process according to any one of the preceding claims, wherein the translation speed before executing the translation stop command is different than the translation speed after executing the translation stop command.

16. A three-dimensional (3D) object production system comprising a thermoset printing apparatus comprising:
a mixing chamber to receive and mix at least a first reactive component and a second reactive component to provide a thermosetting material;
an extrusion nozzle to deliver the thermosetting material to form the 3D object;
at least one actuator coupled to the extrusion nozzle to move the extrusion nozzle when delivering the thermosetting material to form the 3D object; and
a controller comprising one or more processors and operably coupled to the extruded thermoset printing apparatus, **characterized in that** the controller is configured to:
generate a printing path for the 3D printing process,
execute a translation start command, a flow start command, a translation command, a flow command, a translation stop command, a flow stop command, and a reverse translation command to the thermoset printing apparatus during the 3D printing process,
identify an at least one discontinuity in the printing path,
execute the flow stop command before the extrusion nozzle reaches the at least one discontinuity,
execute the translation stop command before the at least one discontinuity,
execute a reverse translation command, and
produce a 3D object based on a 3D object design using thermosetting material delivered by the thermoset printing apparatus.

## Patentansprüche

1. Prozess zum Herstellen von dreidimensionalen (3D) Objekten, umfassend:
Bereitstellen einer Duroplast-Druckvorrichtung, umfassend:
eine Mischkammer zum Aufnehmen und Mischen von mindestens einer ersten reaktiven Komponente und einer zweiten reaktiven Komponente, um ein duroplastisches Material bereitzustellen,
eine Extrusionsdüse zum Ausgeben des duroplastischen Materials zum Bilden eines 3D-Objekts, mindestens einen Aktor, der mit der Extrusionsdüse gekoppelt ist, um die Extrusionsdüse beim Ausgeben des duroplastischen Materials zum Formen des 3D-Objekts zu bewegen, und
ein Steuergerät, das einen oder mehrere Prozessoren umfasst und mit der Druckvorrichtung für extrudierte Duroplaste gekoppelt ist, und
Aufbringen des duroplastischen Materials zum Bilden des 3D-Objekts,
**dadurch gekennzeichnet, dass** das Steuergerät
einen Druckpfad für den 3D-Druckprozess generiert,
einen Translationsstartbefehl, einen Flussstartbefehl, einen Translationsbefehl, einen Flussbefehl, einen Translationsstoppbefehl, einen Flussstoppbefehl und einen Rückwärtstranslationsbefehl an die Druckvorrichtung für Duroplaste während des 3D-Druckprozesses ausführt,
mindestens eine Diskontinuität im Druckpfad erkennt,
den Flussstoppbefehl ausführt, bevor die Extrusionsdüse die mindestens eine Diskontinuität erreicht,
den Translationsstoppbefehl vor der mindestens einen Diskontinuität ausführt, und
einen Rücktranslationsbefehl ausführt.

2. Prozess zum Herstellen von 3D-Objekten nach Anspruch 1, umfassend das Aufbringen des duroplastischen Materials für mindestens etwa 0,05 Sekunden nach dem Ausführen des Rückwärtstranslationsbefehls.

3. Prozess zum Herstellen von 3D-Objekten nach Anspruch 1 oder 2, wobei nach dem Ausführen des Rückwärtstranslationsbefehls mindestens etwa 0,05 Prozent des in der Extrusionsdüse verbleibenden duroplastischen Materials aufgebracht werden.

4. Prozess zum Herstellen von 3D-Objekten nach einem der vorhergehenden Ansprüche, umfassend das Aufbringen des duroplastischen Materials für mindestens etwa 0,05 Sekunden nach dem Ausführen des Flussstoppbefehls.

5. Prozess zum Herstellen von 3D-Objekten nach einem der vorhergehenden Ansprüche, wobei nach dem Ausführen des Flussstoppbefehls mindestens etwa 0,05 Prozent des in der Extrusionsdüse verbleibenden duroplastischen Materials aufgebracht werden.

6. Prozess zum Herstellen von 3D-Objekten nach einem der vorhergehenden Ansprüche, umfassend mindestens zwei Diskontinuitäten im Druckpfad.

7. Prozess zum Herstellen von 3D-Objekten nach einem der vorhergehenden Ansprüche, wobei das duroplastische Material eine Viskoelastizität mit einem G'/G" von mehr als etwa 0,1 umfasst.

8. Prozess zum Herstellen von 3D-Objekten nach einem der vorhergehenden Ansprüche, wobei die Duroplast-Druckvorrichtung eine Saugpumpe umfasst.

9. Prozess zum Herstellen von 3D-Objekten nach einem der vorhergehenden Ansprüche, umfassend das Anwenden einer Saugwirkung nach dem Ausführen des Rückwärtstranslationsbefehls.

10. Prozess zum Herstellen von 3D-Objekten nach einem der vorhergehenden Ansprüche, umfassend das Anwenden einer Saugwirkung nach dem Ausführen des Translationsstoppbefehls.

11. Prozess zum Herstellen von 3D-Objekten nach einem der vorhergehenden Ansprüche, umfassend das Anwenden einer Saugwirkung nach dem Ausführen des Flussstoppbefehls.

12. Prozess zum Herstellen von 3D-Objekten nach einem der vorhergehenden Ansprüche, umfassend das Ausführen des Flussstartbefehls vor dem Ausführen des Translationsstartbefehls.

13. Prozess zum Herstellen von 3D-Objekten nach einem der vorhergehenden Ansprüche, wobei sich die Translationsgeschwindigkeit vor dem Ausführen des Flussstoppbefehls von der Translationsgeschwindigkeit nach dem Ausführen des Flussstoppbefehls unterscheidet.

14. Prozess zum Herstellen von 3D-Objekten nach einem der vorhergehenden Ansprüche, wobei sich die Translationsgeschwindigkeit vor dem Ausführen des Rückwärtstranslationsbefehls von der Translationsgeschwindigkeit nach dem Ausführen des Rückwärtstranslationsbefehls unterscheidet.

15. Prozess zum Herstellen von 3D-Objekten nach einem der vorhergehenden Ansprüche, wobei sich die Translationsgeschwindigkeit vor dem Ausführen des Translationsstoppbefehls von der Translationsgeschwindigkeit nach dem Ausführen des Tranlationsstoppbefehls unterscheidet.

16. System zum Herstellen von dreidimensionalen (3D) Objekten, umfassend eine Duroplast-Druckvorrichtung, die umfasst:
eine Mischkammer zum Aufnehmen und Mischen von mindestens einer ersten reaktiven Komponente und einer zweiten reaktiven Komponente, um ein duroplastisches Material bereitzustellen;
eine Extrusionsdüse zur Ausgabe des duroplastischen Materials zum Bilden des 3D-Objekts;
mindestens einen Aktor, der mit der Extrusionsdüse gekoppelt ist, um die Extrusionsdüse beim Ausgeben des duroplastischen Materials zum Formen des 3D-Objekts zu bewegen; und
ein Steuergerät, das einen oder mehrere Prozessoren umfasst und betriebsmäßig mit der Druckvorrichtung für extrudierte Duroplaste gekoppelt ist, **dadurch gekennzeichnet, dass** das Steuergerät konfiguriert ist zum:
Generieren eines Druckpfads für den 3D-Druckprozess,
Ausführen eines Translationsstartbefehls, eines Flussstartbefehls, eines Translationsbefehls, eines Flussbefehls, eines Translationsstoppbefehls, eines Flussstoppbefehls und eines Rückwärtstranslationsbefehls an die Druckvorrichtung für Duroplaste während des 3D-Druckvorgangs,
Erkennen mindestens einer Diskontinuität im Druckpfad,
Ausführen des Flussstoppbefehls, bevor die Extrusionsdüse die mindestens eine Diskontinuität erreicht,
Ausführen des Translationsstoppbefehls vor der mindestens einen Diskontinuität,
Ausführen eines Rücktranslationsbefehls und
Herstellen eines 3D-Objekts auf der Grundlage eines 3D-Objektdesigns unter Verwendung von duroplastischem Material, das von der Duroplast-Druckvorrichtung ausgegeben wird.

## Revendications

1. Processus de fabrication d'un objet tridimensionnel (3D) comprenant :
la fourniture d'un appareil d'impression thermodurcie comprenant :
une chambre de mélange pour recevoir et mélanger au moins un premier composant réactif et un second composant réactif afin de fournir un matériau thermodurcissable,
une buse d'extrusion pour distribuer le matériau thermodurcissable afin de former un objet 3D,
au moins un actionneur couplé à la buse d'extrusion pour déplacer la buse d'extrusion lors de la distribution du matériau thermodurcissable pour former l'objet 3D, et
un dispositif de commande comprenant un ou plusieurs processeurs et couplé à l'appareil d'impression thermodurcie extrudée, et
le dépôt du matériau thermodurcissable pour former l'objet 3D,
**caractérisé en ce que** le dispositif de commande
génère un chemin d'impression pour le processus d'impression 3D,
exécute une commande de début de translation, une commande de début d'écoulement, une commande de translation, une commande d'écoulement, une commande d'arrêt de translation, une commande d'arrêt d'écoulement et une commande de translation inverse à l'appareil d'impression thermodurcie durant le processus d'impression 3D,
identifie une au moins une discontinuité dans le chemin d'impression,
exécute la commande d'arrêt d'écoulement avant que la buse d'extrusion n'atteigne la au moins une discontinuité,
exécute la commande d'arrêt de translation avant la au moins une discontinuité, et
exécute une commande de translation inverse.

2. Processus de fabrication d'objet 3D selon la revendication 1, comprenant le dépôt du matériau thermodurcissable pendant au moins environ 0,05 seconde après l'exécution de la commande de translation inverse.

3. Processus de fabrication d'un objet 3D selon la revendication 1 ou 2, après l'exécution de la commande de translation inverse, le dépôt d'au moins environ 0,05 pour cent du matériau thermodurcissable restant dans la buse d'extrusion.

4. Processus de fabrication d'un objet 3D selon l'une quelconque des revendications précédentes, comprenant le dépôt du matériau thermodurcissable pendant au moins environ 0,05 seconde après l'exécution de la commande d'arrêt d'écoulement.

5. Processus de fabrication d'un objet 3D selon l'une quelconque des revendications précédentes, après l'exécution de la commande d'arrêt d'écoulement, le dépôt d'au moins environ 0,05 pour cent du matériau thermodurcissable restant dans la buse d'extrusion.

6. Processus de fabrication d'un objet 3D selon l'une quelconque des revendications précédentes, comprenant au moins deux discontinuités dans le chemin d'impression.

7. Processus de fabrication d'un objet 3D selon l'une quelconque des revendications précédentes, ledit matériau thermodurcissable comprenant une viscoélasticité comportant un G'/G" supérieur à environ 0,1.

8. Processus de fabrication d'un objet 3D selon l'une quelconque des revendications précédentes, ledit appareil d'impression thermodurcie comprenant une pompe d'aspiration.

9. Processus de fabrication d'un objet 3D selon l'une quelconque des revendications précédentes, comprenant l'application d'une aspiration après l'exécution de la commande de translation inverse.

10. Processus de fabrication d'un objet 3D selon l'une quelconque des revendications précédentes, comprenant l'application d'une aspiration après l'exécution de la commande d'arrêt de translation.

11. Processus de fabrication d'objet 3D selon l'une quelconque des revendications précédentes, comprenant l'application d'une aspiration après l'exécution de la commande d'arrêt d'écoulement.

12. Processus de fabrication d'un objet 3D selon l'une quelconque des revendications précédentes, comprenant l'exécution de la commande de début d'écoulement avant l'exécution de la commande de début de translation.

13. Processus de fabrication d'un objet 3D selon l'une quelconque des revendications précédentes, ladite vitesse de translation avant l'exécution de la commande d'arrêt d'écoulement étant différente de la vitesse de translation après l'exécution de la commande d'arrêt d'écoulement.

14. Processus de fabrication d'un objet 3D selon l'une quelconque des revendications précédentes, ladite vitesse de translation avant l'exécution de la commande de translation inverse étant différente de la vitesse de translation après l'exécution de la commande de translation inverse.

15. Processus de fabrication d'un objet 3D selon l'une quelconque des revendications précédentes, ladite vitesse de translation avant l'exécution de la commande d'arrêt de translation étant différente de la vitesse de translation après l'exécution de la commande d'arrêt de translation.

16. Système de fabrication d'un objet tridimensionnel (3D) comprenant un appareil d'impression thermodurcie comprenant :
une chambre de mélange pour recevoir et mélanger au moins un premier composant réactif et un second composant réactif afin de fournir un matériau thermodurcissable ;
une buse d'extrusion pour distribuer le matériau thermodurcissable afin de former l'objet 3D ;
au moins un actionneur couplé à la buse d'extrusion pour déplacer la buse d'extrusion lors de la distribution du matériau thermodurcissable pour former l'objet 3D ; et
un dispositif de commande comprenant un ou plusieurs processeurs et couplé fonctionnellement à l'appareil d'impression thermodurcie extrudée, **caractérisé en ce que** le dispositif de commande est configuré pour :
générer un chemin d'impression pour le processus d'impression 3D,
exécuter une commande de début de translation, une commande de début d'écoulement, une commande de translation, une commande d'écoulement, une commande d'arrêt de translation, une commande d'arrêt d'écoulement et une commande de translation inverse à l'appareil d'impression thermodurcie durant le processus d'impression 3D,
identifier une au moins une discontinuité dans le chemin d'impression,
exécuter la commande d'arrêt d'écoulement avant que la buse d'extrusion n'atteigne la au moins une discontinuité,
exécuter la commande d'arrêt de translation avant la au moins une discontinuité,
exécuter une commande de translation inverse, et
produire un objet 3D sur la base d'une conception d'objet 3D à l'aide d'un matériau thermodurcissable distribué par l'appareil d'impression thermodurcie.
